# EUROPEAN PATENT APPLICATION

(11) **EP 4 006 804 A1**
(43) Date of publication of application: **01.06.2022**
(21) Application number: 20847783.6
(22) Date of filing: 22.07.2020
(51) Int. Cl.: G06Q 20/40

(54) **AUTHENTICATION PROCESSING DEVICE, SETTLEMENT TERMINAL, SET-UP PROGRAM, SETTLEMENT SYSTEM, AND SETTLEMENT METHOD**

(30) Priority: 31.07.2019 JP 2019141490
(71) Applicant: GLORY LTD., Himeji-shi Hyogo 670-8567 (JP)
(72) Inventor: SHIROURA, Yasunori, Himeji-shi, Hyogo 670-8567 (JP); TERAMOTO, Shutaro, Himeji-shi, Hyogo 670-8567 (JP); SUZUKI, Maki, Himeji-shi, Hyogo 670-8567 (JP); KASAHARA, Hiraku, Himeji-shi, Hyogo 670-8567 (JP)
(74) Representative: Roberts, David
(86) International application number: PCT/JP2020/028454
(87) International publication number: WO 2021/020278

(57) **Abstract**

The authentication processing device according to the present invention is provided with: a user terminal 100 which generates identification information; an authentication server 200 which stores identification information transmitted from the user terminal 100 in association therewith; and a settlement terminal 300 which transmits, to the authentication server 200, authentication information required for authentication of a second user, wherein the authentication server 200 performs authentication on the second user by comparing the identification information and the authentication information, and transmits result information including a result of the authentication to the settlement terminal 300, and, in the case when the result information indicates successful authentication for the second user, the settlement terminal 300 settles the payment for a commercial product using a first user's account.

## Description

### Technical Field

The present invention relates to an identification processing apparatus, a settlement terminal, a set-up program, a settlement system, and a settlement method

### Background Art

There is known a customer transaction system in which a customer efficiently gives cash to a person who cannot perform an account transaction in a financial institution (see Patent Literature (hereinafter referred to as "PTL") 1). Further, in recent years, transactions through non-cash settlement (cashless settlement) have been becoming popular in addition to transactions through cash settlement.

### Citation List

### Patent Literature

PTL 1
Japanese Patent Application Laid-Open No. 2018-128975

### Summary of Invention

### Technical Problem

In a case where a certain person makes remittance to another person by using non-cash settlement, however, both are required to comprise accounts of the same non-cash settlement service.

Further, even when both comprise accounts of the same non-cash settlement service, it may be possible to make remittance but it may be difficult to perform dispensing, depending on the service.

Given these circumstances, there is a demand that a certain person wishes to allow another person, who does not comprise an account of the same non-cash settlement service as that of the certain person, to perform a transaction by using an account of the certain person.

An object of the present invention is to provide an identification processing apparatus, a settlement terminal, a set-up program, a settlement system, and a settlement system which enable a person who comprises an account for non-cash settlement to authorize another person to utilize the account.

### Solution to Problem

An identification processing apparatus of the present invention comprises: a memory unit that stores recognition information based on which an authorized person who has been authorized to utilize at least part of a predetermined account for non-cash settlement is recognized; an identification unit that acquires an identification request comprising identification information from a settlement terminal installed at a store, where the authorized person purchases a commercial product by utilizing the account, and performs identification of the authorized person by matching the recognition information with the identification information; and a communication unit that receives the identification information from the settlement terminal and transmits a result of the identification to the settlement terminal.

A settlement terminal of the present invention performs settlement, and comprises: an identification information generating unit that generates identification information that is transmitted to an identification server apparatus that stores recognition information based on which an authorized person who has been authorized to utilize at least part of a predetermined account for non-cash settlement is recognized; a communication unit that transmits an identification request comprising the identification information to the identification server apparatus and receives result information comprising a result of identification of the authorized person, where the identification has been performed by the identification server apparatus by matching the recognition information with the identification information; and a settlement unit that settles, in a case where the result information indicates that the identification of the authorized person is successful, payment for a commercial product, which the authorized person intends to purchase, by using the account.

A set-up program of the present invention causes processing to be executed. The processing comprises:
receiving an operation to set an authorized person who has been authorized to utilize at least part of a predetermined account for non-cash settlement;
generating recognition information based on which the authorized person is recognized; and
transmitting the recognition information to an identification server apparatus that stores the recognition information and performs identification of the authorized person based on the recognition information.

A settlement system of the present invention comprises: a terminal apparatus that generates recognition information based on which an authorized person who has been authorized to utilize at least part of a predetermined account for non-cash settlement is recognized; an identification server apparatus that stores the recognition information transmitted from the terminal apparatus; and a settlement terminal that performs settlement when the authorized person purchases a commercial product by utilizing the account. The settlement terminal transmits an identification request comprising identification information to the identification server apparatus. The identification server apparatus performs identification of the authorized person by matching the recognition information with the identification information, and transmits result information comprising a result of the identification to the settlement terminal. In a case where the result information indicates that the identification of the authorized person is successful, the settlement terminal settles payment for the commercial product by using the account.

A settlement method of the present invention comprises:
generating, by a terminal apparatus, recognition information based on which an authorized person who has been authorized to utilize at least part of a predetermined account for non-cash settlement is recognized;
storing, by an identification server apparatus, the recognition information transmitted from the terminal apparatus;
transmitting, by a settlement terminal that performs settlement when the authorized person purchases a commercial product by utilizing the account, an identification request comprising identification information to the identification server apparatus;
performing, by the identification server apparatus, identification of the authorized person by matching the recognition information with the identification information, and transmitting, by the identification server apparatus, result information comprising a result of the identification to the settlement terminal; and
settling, by the settlement terminal, payment for the commercial product by using the account in a case where the result information indicates that the identification of the authorized person is successful.

### Advantageous Effects of Invention

According to the present invention, a person who comprises an account for non-cash settlement is capable of authorizing another person to utilize the account.

### Brief Description of Drawings

FIG. 1 is a conceptual diagram provided for describing an overall flow of processing in a settlement authority-granting system according to an embodiment of the present invention;
FIG. 2 is a sequence diagram illustrating a schematic flow of processing in the settlement authority-granting system;
FIG. 3 is a block diagram illustrating a configuration of the settlement authority-granting system;
FIG. 4 illustrates a flowchart provided for describing authorization processing executed by a user terminal; and
FIG. 5 illustrates a flowchart provided for describing identification processing executed by an identification server.

### Description of Embodiments

Hereinafter, an embodiment of the present invention will be described in detail with reference to the accompanying drawings. However, a more detailed description than necessary, for example, a detailed description of already well-known matters, a duplicated description of substantially the same configuration, and the like may be omitted.

Note that, the following description and referenced drawings are provided for a person skilled in the art to understand the present invention and are not intended to limit the scope of the claims of the present invention.

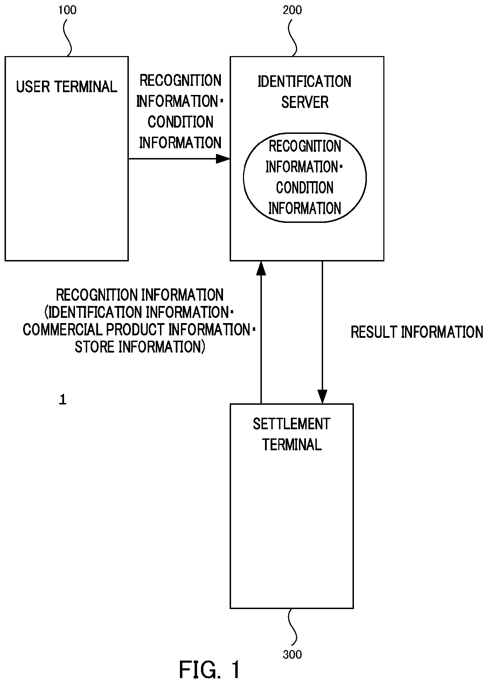

FIG. 1 is a conceptual diagram of a settlement system 1 according to an embodiment of the present invention. As illustrated in FIG. 1, the settlement system 1 comprises a user terminal 100, an identification server 200, and a settlement terminal 300.

The user terminal 100 is a terminal apparatus that performs processing for a person, who has an account for non-cash settlement, to authorize an another person to utilize the account, or the like. The identification server 200 is a cloud server apparatus that performs identification or the like of a person who has been authorized to utilize an account of a person for non-cash settlement by the person who has the account. The settlement terminal 300 is a terminal apparatus that is installed at a store and performs non-cash settlement processing or the like.

Note that, although one user terminal 100, one identification server 200, and one settlement terminal 300 are depicted in the example illustrated in FIG. 1, respectively, the present invention is not limited thereto. The settlement system 1 may comprise a plurality of the user terminals 100, a plurality of the identification servers 200, and a plurality of the settlement terminals 300, respectively.

Note that, the settlement system 1 is an example of the settlement system of the present invention. Further, the user terminal 100 is an example of the user terminal of the present invention. Further, the identification server 200 is an example of the identification processing apparatus or identification server apparatus of the present invention. Further, the settlement terminal 300 is an example of the settlement terminal of the present invention.

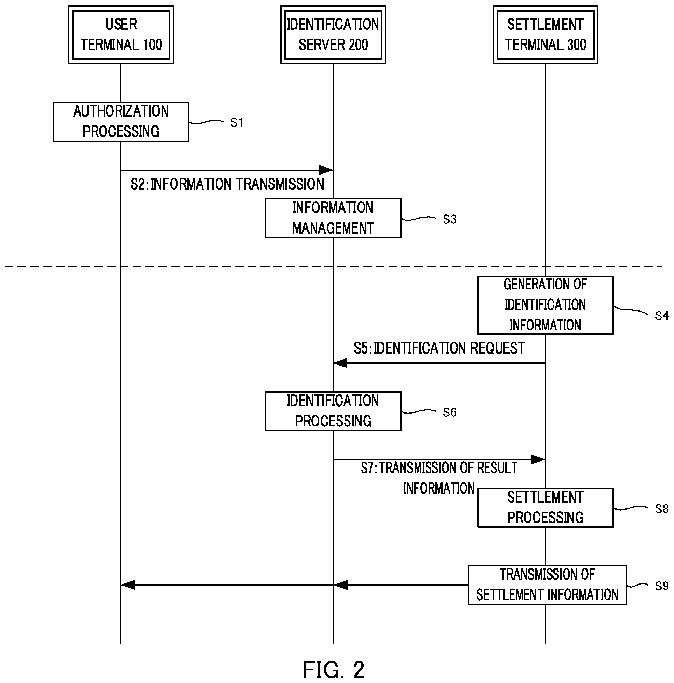

Hereinafter, a schematic flow of processing in the settlement system 1 will be described with reference to FIGS. 1 and 2.

The user terminal 100 is a terminal apparatus comprised by a first user in the settlement system 1. The user terminal 100 is, for example, a portable terminal apparatus such as a smartphone and a tablet terminal.

The first user is an owner of an account for non-cash settlement (cashless settlement). The account for non-cash settlement means a right to receive a non-cash settlement service. In the following description, the account of the first user for non-cash settlement may be referred to simply as "account".

An application program for the first user to grant at least part of authority to perform settlement by utilizing the account of the first user to an authorized person is installed at the user terminal 100. The authorized person is a person different from the first user, and is an example of the user of the present invention. In the following description, the authorized person is described as "second user".

This application program is configured to be capable of setting various conditions in a case where the first user allows the second user to utilize the account. This application program is an example of the set-up program of the present invention.

In the following description, at least part of the authority to perform settlement by utilizing the account is referred to as "settlement authority". Further, the application program for granting the settlement authority to the second user is referred to as "user-setting application". Further, a condition(s) for allowing the second user to utilize the account are referred to as "utilization condition(s)". Details of utilization conditions will be described later.

In a case where the first user grants the settlement authority to the second user, the first user first operates the user terminal 100 in which the user-setting application is executed, and performs authorization processing of registering the second user as an authorized person (step S1 illustrated in FIG. 2).

At this time, the user terminal 100 in which the user-setting application operates generates recognition information for recognizing the second user, and condition information indicating a utilization condition(s) described above.

The recognition information is arbitrarily selected from any of a plurality of kinds of recognition information. As an example of the kinds of recognition information, it is possible to mention biometric information used for biometric identification of the second user, specifically face image data, voiceprint data, and moving image data in which movements of the body are stored, and the like. Further, as another example, it is possible to mention an identification code (such as a barcode and a two-dimensional code, for example) issued to the second user during the authorization processing. Details of the authorization processing will be described later.

The recognition information and the condition information generated by the user terminal 100 are transmitted to the identification server 200 (step S2).

The identification server 200 stores the recognition information and the condition information, which are transmitted from the user terminal 100, and settlement information to be described later in association with each other (step S3).

The second user to whom the settlement authority has been granted by the first user intends to go to a store and purchase a desired commercial product by using the settlement authority. At this point in time, a clerk of the store does not know whether the person who purchases the commercial product is the second user to whom the settlement authority has been granted, and it is therefore necessary to perform identification of the person who purchases the commercial product.

When the second user purchases the commercial product, the settlement terminal 300 installed at the store generates identification information for causing the identification server 200 to perform identification of the second user (step S4).

The identification information is information for performing the identification of the second user by matching the recognition information described above with the identification information. The identification information corresponds to a kind of the recognition information stored in the identification server 200.

That is, in a case where the recognition information stored in the identification server 200 comprises face image data of the second user, the second user declares to the clerk, who operates the settlement terminal 300, that the second user wishes face identification. Upon receiving this declaration, the clerk operates the settlement terminal 300 to generate face image data of the second user. The settlement terminal 300 then generates identification information comprising the generated face image data.

Further, in a case where the recognition information stored in the identification server 200 comprises an identification code given to the second user, the second user causes the identification code to be displayed on a portable terminal or the like in advance, which is comprised by the second user, and declares to the clerk that the second user wishes identification by means of the identification code. Upon receiving this declaration, the clerk operates the settlement terminal 300 to read the identification code presented by the second user. The settlement terminal 300 then generates identification information comprising the read identification code.

The settlement terminal 300 transmits an identification request for requesting the identification of the second user to the identification server 200 (step S5). The identification request comprises the identification information described above, commercial product information on the commercial product to be purchased by the second user, and store information on the store where the second user purchases the commercial product.

When the identification server 200 receives the identification request from the settlement terminal 300, the identification server 200 performs identification processing of the second user by using the identification information, the commercial product information, and the store information, which are comprised in the identification request, and the recognition information, the condition information, and the settlement information (step S6). Details of the identification processing by the identification server 200 will be described later.

Thereafter, the identification server 200 transmits result information indicating a result of the identification to the settlement terminal 300 (step S7). In a case where the identification is successful, the settlement terminal 300 that has received the result information performs, based on the result information, settlement processing of the commercial product to be purchased by the second user (step S8). In a case where the identification is unsuccessful, the settlement terminal 300 does not perform the settlement processing and displays on a display screen (not illustrated) a message or the like that a utilization condition(s) is/are not satisfied.

Existing non-cash settlement techniques can be utilized for the settlement processing by the settlement terminal 300. That is, payment for a commercial product may be withdrawn from an account of a financial institution, electronic money or the like of the first user, which is associated with the account of the first user. Note that, the settlement processing may be performed by the settlement terminal 300 or may be performed by another settlement apparatus (such as a POS (point of sales) register) that operates in cooperation with the settlement terminal 300.

In step S9, the settlement terminal 300 transmits settlement information comprising a result of the settlement processing to the user terminal 100 and the identification server 200. Thus, for example, the settlement information can be displayed at the user terminal 100, and the first user can confirm that the second user has been able to purchase the commercial product. Further, the identification server 200 stores the settlement information in association with the recognition information and the condition information described above.

As described above, in the settlement system 1, the first user is capable of granting at least part of the authority to perform settlement by utilizing the account of the first user for non-cash settlement to the second user. Thus, the second user can purchase a commercial product at a store by utilizing the account of the first user.

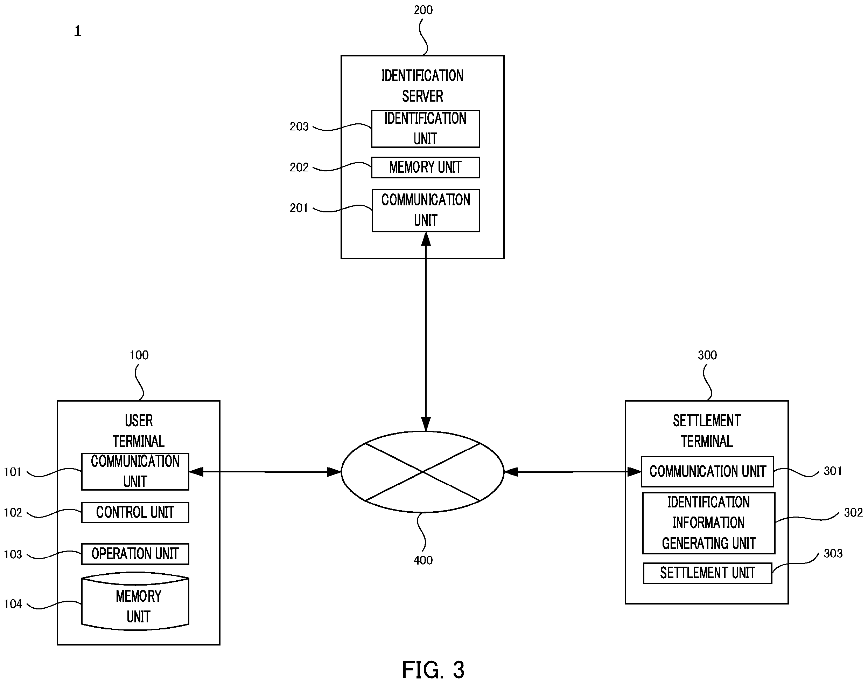

Hereinafter, each configuration of the settlement system 1 will be described with reference to FIG. 3. As illustrated in FIG. 3, in the settlement system 1, the user terminal 100, the identification server 200, and the settlement terminal 300 are connected to each other via a network 400.

Note that, although one user terminal 100, one identification server 200, and one settlement terminal 300 are depicted in the example illustrated in FIG. 3, respectively, the present invention is not limited thereto, and the settlement system 1 may comprise a plurality of the user terminals 100, a plurality of the identification servers 200, and a plurality of the settlement terminals 300, respectively, in the same manner as in FIG. 1.

The network 400 may be, for example, a public network such as the Internet, a dedicated network, a network comprising both a public network and a dedicated network, or the like.

As illustrated in FIG. 3, the user terminal 100 comprises a communication unit 101, a control unit 102, an operation unit 103, and a memory unit 104.

The communication unit 101 is a communication device that transmits and receives various kinds of information via the network 400. The control unit 102 is a control device, such as a processor, that performs the authorization processing by executing the application program (the user-setting application).

The operation unit 103 is an operation device for receiving an operation of the first user and is, for example, a pointing device such as a touch screen, a keyboard (comprising a software keyboard), and a stylus. The memory unit 104 is a memory device such as a memory. The control unit 102 reads data, programs and the like stored in the memory unit 104, and performs various kinds of processing.

The identification server 200 comprises a communication unit 201, a memory unit 202, and an identification unit 203.

The communication unit 201 is a communication device that transmits and receives various kinds of information via the network 400.

The memory unit 202 stores recognition information and condition information, which are received from the user terminal 100, and settlement information received from the settlement terminal 300 in association with each other.

In a case where the identification unit 203 receives an identification request from the settlement terminal 300, the identification unit 203 performs identification processing by using recognition information and condition information, and settlement information, which are stored in the memory unit 202, and identification information, commercial product information, and store information, which are comprised in the identification request.

The memory unit 202 and the identification unit 203 are formed of a control device such as a processor.

The memory unit 202 is a memory device, such as a memory and a magnetic disk apparatus, that stores various kinds of information such as recognition information, condition information, and settlement information. Note that, the memory unit 202 may not be provided inside the identification server 200 or may be provided outside the identification server 200 in a state in which the memory unit 202 is capable of communicating with the other configurations of the identification server 200.

The settlement terminal 300 comprises a communication unit 301, an identification information generating unit 302, and a settlement unit 303.

The communication unit 301 is a communication device that transmits and receives various kinds of information via the network 400.

The identification information generating unit 302 generates identification information for performing identification of the second user who visits a store and purchases a commercial product by utilizing the account of the first user. The settlement unit 303 performs settlement processing based on a result of identification received from the identification server 200.

The identification information generating unit 302 and the settlement unit 303 are formed of a control device such as a processor.

Next, each processing executed by each apparatus forming the settlement system 1 will be described in detail.

### <Authorization Processing>

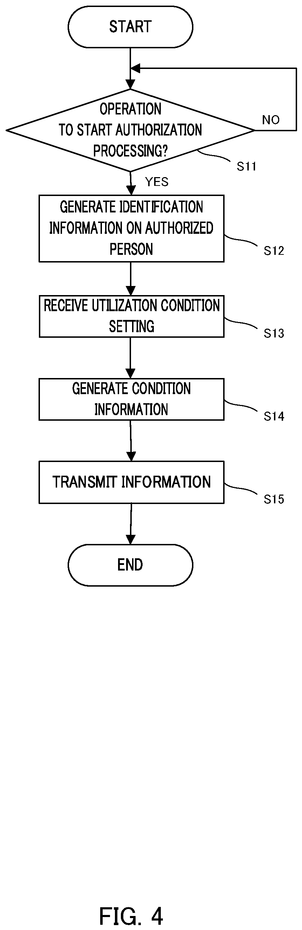

First, the authorization processing executed by the user terminal 100 will be described with reference to FIG. 4. The authorization processing described below is performed by reading and executing, by the control unit 102 of the user terminal 100, of the user-setting application stored in the memory unit 104.

In step S11, the user terminal 100 in which the user-setting application operates determines whether the first user has performed an operation to start the authorization processing on the operation unit 103.

This start operation is, for example, an operation in which the first user touches an icon of the user-setting application. The icon is displayed on a display (not illustrated) of the user terminal 100.

In a case where the start operation is performed (step S11: YES), the processing proceeds to step S12. Otherwise (step S11: NO), the processing in step S11 is repeated.

In a case where the user terminal 100 determines that the start operation has been performed, the user terminal 100 generates recognition information on the authorized person (the second user) in step S12. Specifically, the user terminal 100 generates biometric information on the second user as the recognition information, by causing the first user to capture a face image of the second user by using a camera (not illustrated), or by causing the first user to store the voice of the second user by using a microphone (not illustrated).

Alternatively, the user terminal 100 may communicate with a server (not illustrated) and acquire a two-dimensional code for being displayed on a second user terminal (not illustrated) of the second user to set the two-dimensional code as the recognition information.

In step S13, the user terminal 100 receives an operation of utilization condition setting by the first user. As examples of utilization conditions, it is possible to mention, for example, utilization conditions below.

A first example of the utilization conditions is a condition of an upper limit amount of settlement that can be performed at one time (hereinafter referred to as "upper limit amount (one time)"). For example, when the upper limit amount (one time) is set to 3,000 JPY, the second user can purchase a commercial product up to 3,000 JPY at one time by utilizing the settlement authority.

A second example of the utilization conditions is a condition of a total amount of upper limit amounts of settlements that can be performed (hereinafter referred to as "upper limit amount (total amount)"). For example, when the upper limit amount (total amount) is set to 10,000 JPY, the second user can purchase commercial products with a total amount up to 10,000 JPY when the purchase of the commercial products is made a plurality of times by utilizing the settlement authority.

A third example of the utilization conditions is a condition of an upper limit number of commercial products that can be settled at one time. For example, when the upper limit number of commercial products is set to three, the second user cannot purchase four or more commercial products at one time.

A fourth example of the utilization conditions is a condition of a kind of a commercial product. For example, when chewing gum is set as the kind of the commercial product, the second user cannot purchase a commercial product, for example, chocolate, other than chewing gum by utilizing the settlement authority.

In addition, more specifically, a utilization condition may also be set such that only chewing gum with a commercial product name B of a company A can be purchased, for example. Further, not only a kind of a commercial product, but a commercial product genre (for example, confectionery, stationery, or the like) or a commercial product recognition code such as a JAN (Japanese Article Number) code can also be set as a utilization condition.

A fifth example of the utilization conditions is a condition of a store where the settlement authority can be utilized. For example, when a store C is set, the second user cannot purchase a commercial product at a store other than the store C by utilizing the settlement authority.

A utilization condition may also be set such that a commercial product can be purchased not only at a specific store, but also, for example, solely at a store belonging to a specific chain. Further, a utilization condition may also be set such that a commercial product can be purchased only at a store located at a specific location. For example, when a shopping street D or a building E is set as the location, the second user cannot purchase a commercial product at a store located in a location other than the shopping street D or the building E by utilizing the settlement authority. It may also be configured such that not only a specific location, but a specific area (for example, in a town F, on the premises of a station G, or the like) can also be set.

A sixth example of the utilization conditions is a period during which the settlement authority can be utilized. For example, when the period is set to three days, the second user cannot purchase a commercial product by utilizing the settlement authority on or after the fourth day.

The period is not limited to the number of days, and may be a time unit, a minute unit, a month unit, or a year unit. Alternatively, it may also be configured such that the settlement authority can be utilized only on a specific day (only the day, only January 1, or the like), or only for a specific time zone (only between 15 o'clock and 17 o'clock every day, or the like).

A seventh example of the utilization conditions is an upper limit number of times settlements can be performed. For example, when the upper limit number of times is set to three, the second user cannot purchase commercial products four or more times by utilizing the settlement authority.

An eighth example of the utilization conditions is a condition relating to parental control. In the present embodiment, the utilization condition relating to the parental control is a condition that can be set in a case where the first user is a parent and the second user is his/her child. For example, when the parental control is turned on in a case where the second user (child) intends to make a purchase at a store by using the account of the first user (parent), the terminal (the user terminal 100) of the first user receives a message that the second user intends to make a purchase. At this time, the user terminal 100 may display a screen that allows the first user to select whether to approve the purchase by the second user. In such a case, when the first user selects the approval, settlement is performed by using the account of the first user when the second user makes a purchase, whereas when the first user does not select the approval, the second user cannot make a purchase. When the parental control is not turned on, on the other hand, the first user does not receive a message even in a case where the second user intends to make a purchase by using the account of the first user.

A ninth example of the utilization conditions is a condition relating to a commercial product to be purchased without fail. For example, when soy sauce is set as the commercial product to be purchased without fail, the second user cannot purchase any other commercial product, for example, confectionery, by utilizing the settlement authority unless the second user purchases soy sauce. Note that, in the ninth example of the utilization conditions, payment for a commercial product to be purchased without fail is not comprised in an upper limit amount in a case where the second user uses the settlement authority. This payment is settled, together with payment for a commercial product(s) to be purchased by the second user by utilizing the settlement authority, from the account of the first user. Such a utilization condition enables the second user to make a purchase by utilizing the settlement authority as a reward only in a case where the first user asks the second user to run errands and the second user has completed the errands, for example.

In the examples described above, the case in which the authorized person is one second user has been described, but it may also be configured such that the authorized person is a group formed of a plurality of persons, and that the settlement authority is granted only to a specific number of persons among the group. For example, when a group of six persons are registered as authorized persons and the settlement authority is set to be granted to only three of them, the other three persons cannot utilize the settlement authority.

Further, in addition to the utilization conditions described above, it may also be configured such that an arbitrary condition set by the first user can be set as a utilization condition. Further, it may also be configured such that a plurality of utilization conditions can be combined or only one thereof is set as a utilization condition.

For example, a plurality of utilization conditions may be combined, such as purchase up to 3,000 JPY (upper limit amount) is allowed at a night stall(s) (location, store) provided on the premises of a Shinto shrine H during a day(s) (period) of a festival thereof. In this way, the authority whose uses are limited by the intention of the first user can be flexibly granted.

The description of FIG. 4 will be resumed. In step S14, the user terminal 100 generates condition information indicating the utilization condition(s) set in step S13.

In step S15, the user terminal 100 transmits the recognition information and the condition information to the identification server 200. Thus, the authorization processing is completed.

### identification Processing>

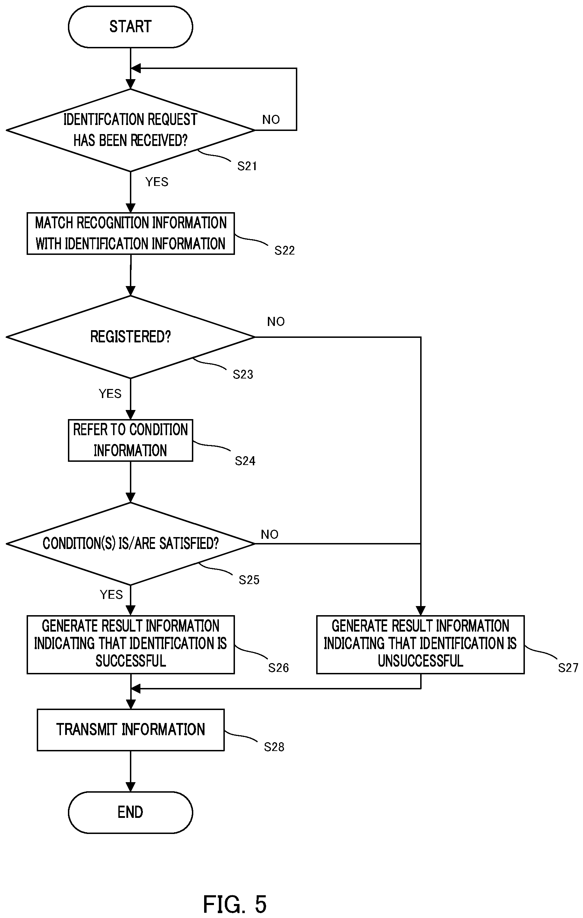

Next, the identification processing executed by the identification server 200 will be described with reference to FIG. 5.

In step S21, the identification unit 203 of the identification server 200 determines whether an identification request has been received from the settlement terminal 300 via the communication unit 201. In a case where the identification unit 203 determines that an identification request has been received (step S21: YES), the processing proceeds to step S22. Otherwise, the processing in step S21 is repeated.

In step S22, the identification unit 203 matches identification information comprised in the identification request received in step S21 with recognition information stored in the memory unit 202.

In step S23, the identification unit 203 determines, based on a result of the matching, whether recognition information indicating the person (that is, the second user who purchases a commercial product at a store) indicated by the identification information has been registered in the identification server 200.

In a case where the identification unit 203 determines that the recognition information for recognizing the person indicated by the identification information has been registered in the identification server 200 (step S23: YES), the processing proceeds to step S24. Otherwise (step S23: NO), the processing proceeds to step S27.

In step S24, the identification unit 203 refers to condition information stored in the memory unit 202. In step S25, the identification unit 203 determines whether the utilization condition(s) comprised in the condition information is/are satisfied.

The condition information may comprise various utilization conditions as in the first to ninth examples described above. In the various utilization conditions that may be comprised in the condition information, there are those which require matching with commercial product information or store information, and those which do not require the above.

In the first to ninth examples described above, the first example (upper limit amount (one time)), the second example (upper limit amount (total amount)), the third example (upper limit number of commercial products), the fourth example (specific commercial product), the fifth example (specific store, location), and the ninth example (commercial product to be purchased without fail) are examples of the utilization conditions that require matching with commercial product information or store information.

With respect to the utilization conditions that require matching with commercial product information or store information as described above, the identification unit 203 matches commercial product information and store information, which are comprised in an identification request, with the utilization condition(s), and determines whether the utilization condition(s) is/are satisfied.

On the other hand, the sixth example (period), the seventh example (upper limit number of times) and the eighth example (parental control) among the first to ninth examples described above do not require matching with commercial product information or store information.

For example, in a case where a specific period is set as a utilization condition, the identification unit 203 determines, based on information on a point in time when the second user intends to purchase a commercial product, whether the utilization condition is satisfied. For example, the identification unit 203 may acquire time-related information from a clock function (not illustrated) comprised by the identification server 200, an external time server or the like to thereby determine whether the utilization condition is satisfied. Note that, the information on the point in time when the second user intends to purchase a commercial product comprise, for example, information on a time when identification information is generated by the settlement terminal 300, a time when the communication unit 201 receives identification information, or the like.

Further, for example, in a case where an upper limit number of times is set as a utilization condition, the identification unit 203 refers to settlement information stored in the memory unit 202 to thereby determine whether the number of times the second user has made a purchase satisfies the utilization condition.

In a case where the identification unit 203 determines that the utilization condition(s) is/are satisfied (step S25: YES), the processing proceeds to step S26. Otherwise (step S25: NO), the processing proceeds to step S27.

In step S26, the identification unit 203 generates result information indicating that the identification is successful. In step S27, on the other hand, the identification unit 203 generates result information indicating that the identification is unsuccessful.

In step S28, the identification unit 203 transmits the result information to the settlement terminal 300. Thus, the identification processing is completed.

The configuration and operations of the settlement system 1 according to the embodiment of the present invention have been described thus far. Hereinafter, Examples 1 to 3 below will be described as more detailed use examples of the settlement system 1.

### (Example 1)

As Example 1, a case where a parent grants the settlement authority to his/her child will be described.

The parent who is the first user having an account for non-cash settlement. Further, the parent has the user terminal 100 described above. It is assumed, on the other hand, that the child who is the second user does not have an account for non-cash settlement and does not have a terminal apparatus such as the user terminal 100 either.

It is assumed that the parent intends to grant, as an allowance, the settlement authority up to 3,000 JPY per month utilizing the account of the parent to the child. In such a case, the parent operates the user terminal 100 to start the user-setting application and registers the child as an authorized person (corresponding to step S1 illustrated in FIG. 2).

Although the registration method is not particularly limited in the present invention, the following method can be adopted, for example.

A button or the like, which is operated when an authorized person is registered, is displayed on an operation screen of the user-setting application. The parent operates the button so that the screen transitions to a screen for selecting a means for registering an authorized person.

As examples of the means for registering an authorized person, it is possible to mention face image registration, voice registration, fingerprint registration, iris registration, or the like as biometric identification. Note that, although the example in which the parent can select a means for registering an authorized person from among a plurality of means has been indicated here, it may also be configured such that the registration of an authorized person is received only by any one method.

In the following description, it is assumed that face image registration has been selected by the parent. In this case, the parent captures a face image of the child by using a camera (not illustrated) of the user terminal 100.

Next, the screen of the user-setting application transitions to a screen for utilization condition registration. On this screen, the parent sets utilization conditions such that the upper limit amount (total amount) is 3,000 JPY and the period is one month. The parent may further set other conditions.

In this Example 1, it is assumed that, in addition to setting the upper limit amount (total amount) described above to 3,000 JPY, the amount that the child can use at one time (upper limit amount (one time)) is set to 500 JPY, and confectionery, books, stationery, and the like are set as commercial products genres, and a store in a town where the parent resides is set as a specific store.

When the registration of the face image of the child and the utilization conditions is completed in this way, the user terminal 100 in which the user-setting application operates generates recognition information and condition information, and transmits the recognition information and the condition information to the identification server 200 (corresponding to step S2 in FIG. 2).

The identification server 200 stores the received recognition information and condition information in association with each other (corresponding to step S3 of FIG. 2). This means that part of the settlement authority of the account of the parent has been granted to the child.

Thereafter, it is assumed that the child intends to go to the store and purchase a commercial product. At that time, the child informs a clerk who operates the settlement terminal 300 of the store that the child purchases the commercial product by utilizing the account of the parent, and that the child wishes identification by means of the face image.

The clerk then captures a face image of the child by using a camera (not illustrated) of the settlement terminal 300. The settlement terminal 300 generates identification information based on the captured face image (corresponding to step S4 in FIG. 2).

Then, the clerk causes the settlement terminal 300 to acquire commercial product information on the commercial product that the child intends to purchase. The commercial product information comprises the commercial product name, manufacturer, JAN code, price, and the like of chewing gum.

For example, the clerk uses a barcode reader or the like to read a barcode described in packaging of the chewing gum and refers to commercial product master information or the like of a server of the store (not illustrated) so that the settlement terminal 300 acquires the commercial product information.

The settlement terminal 300 transmits an identification request comprising, in addition to the identification information generated based on the captured face image of the child and the acquired commercial product information, store information on the store to the identification server 200 (corresponding to step S5 in FIG. 2).

The store information is, for example, information on the store registered in the settlement terminal 300 in advance. The store information comprises information such as the store name, the name of a chain to which the store belongs, the place (address) of the store, and the like.

The identification server 200 that has received the identification request performs identification processing by referring to the identification information, the commercial product information, and the store information, which are comprised in the identification request, and the recognition information and the condition information, which are stored in the identification server 200 (corresponding to step S6 in FIG. 2).

Specifically, the identification server 200 extracts, from the recognition information stored in the identification server 200, recognition information indicating the person (the child who purchases the commercial product at the store) indicated by the identification information. In a case where there is no recognition information indicating the person indicated by the identification information in the recognition information stored in the identification server 200, the identification server 200 determines that the identification is unsuccessful.

In a case where there is recognition information indicating the person indicated by the identification information in the recognition information stored in the identification server 200, the identification server 200 matches the condition information associated with the extracted recognition information with the commercial product information and the store information, and determines whether the utilization conditions set in advance are satisfied. In a case where the utilization conditions set in advance are satisfied, the identification server 200 determines that identification is successful.

In this Example 1, the face image of the child is stored as recognition information in the identification server 200 as described above so that the identification server 200 can extract the recognition information that agrees with the identification information generated by the settlement terminal 300.

Whether the utilization conditions comprised in the condition information are satisfied depends on what the child intends to purchase and at which store. For example, in a case where the child intends to purchase chewing gum of 120 JPY at a supermarket in the town where the parent resides and the total amount of utilization is less than 3,000 JPY, all the utilization conditions set by the parent in this Example 1 are satisfied. Accordingly, in such a case, the identification server 200 determines that the identification is successful.

On the other hand, the utilization conditions are not partially satisfied in a case where the child intends to purchase a commercial product at a convenience store in a neighboring town, in a case where the child intends to purchase a book of 600 JPY, in a case where the total amount of purchase this time exceeds 3,000 JPY, in a case where the child intends to purchase a battery (or batteries) of 300 JPY, or the like. Accordingly, in such a case, the identification server 200 determines that the identification is unsuccessful.

The identification server 200 generates result information based on a result of the identification, and transmits the result information to the settlement terminal 300 (corresponding to step S7 in FIG. 2). In a case where the result information indicates that the identification is successful, the settlement terminal 300 performs settlement processing of the commercial product, which the child intends to purchase, from the account of the parent (corresponding to step S8 in FIG. 2).

In a case where the result information indicates that the identification is unsuccessful, on the other hand, the settlement terminal 300 does not perform settlement processing and displays on the display screen (not illustrated) that the utilization conditions are not satisfied.

When the settlement processing by the settlement terminal 300 is completed, the settlement terminal 300 generates settlement information comprising the name, commercial product genre, and amount of the commercial product purchased by the child, the name and location of the store where the child has purchased the commercial product, and the like, and transmits the settlement information to the user terminal 100 and the identification server 200 (corresponding to step S9 in FIG. 2).

Thus, the user terminal 100 displays information on the commercial product purchased by the child, the location of the store where the child has purchased the commercial product, and the like so that the parent can manage the purchase by the child.

Further, the identification server 200 stores the settlement information in association with the recognition information and the condition information on the child. Thus, when the child intends to purchase a commercial product next time or thereafter, the identification server 200 is capable of determining whether the utilization conditions such as the upper limit amount (total amount) and the upper limit number of times are satisfied.

According to Example 1 as described above, the parent is capable of granting part of the settlement authority of his/her own account to the child only by initially registering the child as an authorized person.

Thus, the child does not need to carry cash, which is safe. In addition, since the child does not need to have an account, labor for the utilization can be small. Further, it is possible to prevent the child from making an improper purchase by proper utilization condition setting.

Further, since the user terminal 100 receives settlement information in a case where the child makes a purchase, the parent is capable of suitably managing the purchase by the child. Since the child can purchase a commercial product that satisfies a utilization condition(s) when the child goes to a store without carrying cash, the child can easily make a purchase by utilizing the settlement authority of the account of the parent.

Note that, although the example in which the parent grants the settlement authority to the child has been described in Example 1, it may also be configured, for example, such that a specific person responsible for housekeeping in one family grants the settlement authority to all the other family member(s). According to such a use example, it is possible to centrally manage housekeeping, which is therefore more suitable.

### (Example 2)

In Example 1 described above, the case where the identification of the child who is the authorized person is performed by using the face image has been described. In Example 2 below, a case where an identification code such as a two-dimensional code is used for identification of a child will be described.

In the same manner as in Example 1, a parent has an account for non-cash settlement and has the user terminal 100. In this Example 2, on the other hand, it is assumed that his/her child who is the second user does not have an account for non-cash settlement, but has a portable terminal apparatus (hereinafter referred to as "second user terminal" (not illustrated)).

In this Example 2, the user terminal 100 in which the user-setting application operates issues an identification code for performing identification of the child in the authorization processing. The identification code issued by the user terminal 100 is transmitted to the second user terminal of the child via a communication network such as the Internet.

Note that, in order to enhance security, it may be configured such that an identification code is not issued by the user terminal 100, but by an external identification server (not illustrated) or the like. Further, it may also be configured such that the identification server does not transmit a generated identification code directly to the second user terminal, but transmits an URL for accessing the identification server to the second user terminal.

Then the user terminal 100 transmits recognition information comprising the issued identification code and condition information on a utilization condition(s) set by the parent to the identification server 200. In the same manner as in Example 1, the identification server 200 stores the recognition information and the condition information in association with each other.

Thereafter, it is assumed that the child intends to go to a store and purchase a commercial product. At this time, the child causes the identification code to be displayed on a display screen of the second user terminal. In a case where an URL for accessing an external identification server is transmitted to the second user terminal in the authorization processing, the child accesses the external identification server by operating the second user terminal, causes the external identification server to issue an identification code, and causes the issued identification code to be displayed on the display screen.

A clerk uses an identification code reader (not illustrated) of the settlement terminal 300 to read the identification code displayed on the second user terminal. The settlement terminal 300 generates identification information comprising information on the read identification code. The clerk then causes the settlement terminal 300 to acquire commercial product information on the commercial product that the child intends to purchase.

The settlement terminal 300 transmits an identification request comprising, in addition to the generated identification information and the acquired commercial product information, store information on the store to the identification server 200.

The identification server 200 that has received the identification request refers to the identification information, the commercial product information, and the store information, which are comprised in the identification request, and the recognition information and the condition information, which are stored in the identification server 200, to perform the identification processing. At this time, the identification server 200 extracts, based on information on the identification code comprised in the identification information, recognition information comprising an identification code that agrees with the identification code.

The identification server 200 generates result information based on a result of the identification and transmits the result information to the settlement terminal 300. Since subsequent operations are the same as those in Example 1, a description thereof will be omitted.

According to Example 2 as described above, as in Example 1, the parent is capable of easily granting part of the settlement authority of his/her own account to the child so that the child does not need to carry cash, which is safe.

Note that, in Example 2 described above, it is assumed that a two-dimensional code is used as the identification code, but the present invention is not limited thereto. For example, a barcode, a one-time password, a personal identification number (PIN) code, or the like may be employed as the identification code.

### (Example 3)

In Example 3, a case in which the first user is a manager of a certain store and the second user (an authorized person) is a customer of the store will be described. That is, it is assumed that there is a plurality of the second users.

It is assumed that at the certain store, the manager intends to make a reduction for a customer, who makes a purchase, in accordance with the amount of a purchase. In such a case, the manager or an employee of the store (hereinafter simply referred to as "clerk") performs the authorization processing for the customer by using the user terminal 100 installed at the store.

Note that, although the user terminal 100 and the settlement terminal 300 appear separately for convenience in the following description, the user terminal 100 and the settlement terminal 300 may be integrally configured.

Specifically, when a customer H makes a purchase, the clerk informs the customer H that a coupon usable for the next or subsequent purchase can be issued when a face image of the customer H is registered. In a case where the customer H approves the registration of his/her face image, the clerk captures a face image of the customer H by using the user terminal 100.

Then the clerk sets, as a utilization condition, the store where the clerk works. Recognition information comprising the face image of the customer H and condition information comprising the set utilization condition are transmitted to the identification server 200 and are stored therein. Further, at this time, the user terminal 100 sets a coupon inventory amount in accordance with the amount of the purchase made by the customer H and stores the coupon inventory amount in the settlement terminal 300.

When the customer H visits the store and purchases a commercial product next time, the customer H informs the clerk that the customer H possesses the coupon. The clerk then captures a face image of the customer H by using the camera (not illustrated) of the settlement terminal 300, and transmits an identification request comprising identification information generated based on the face image and store information to the identification server 200.

In this Example 3, commercial product information may not be comprised in the identification request. Alternatively, in a case where the coupon covers only commercial products of a specific genre, for example, commercial product information on the commercial product to be purchased by the customer H may be comprised in the identification request.

When the identification processing is performed by the identification server 200 and result information indicating that the identification is successful is transmitted to the settlement terminal 300, the settlement terminal 300 presents an amount, which is obtained by subtracting the coupon inventory amount from the price of the commercial product purchased by the customer H, to the customer H. Thus, customer H can receive a discount in accordance with the amount of the purchase to be made by the customer H previously.

According to Example 3 as such, a customer does not need to carry, for example, a point card, a coupon, a voucher or the like issued by a store and can receive a discount service in accordance with the amount of a purchase made by the customer previously.

Note that, in the description of Example 3 above, the manager of the store as the first user grants the settlement authority of the account of the manager to a customer, but the amount for a coupon is not actually settled from the account of the manager. Coupon inventory amounts for each customer are stored in the settlement terminal 300, and when a customer purchases a commercial product, the amount for a coupon is only subtracted from the inventory amount. However, the present invention is not limited thereto. For example, it may also be configured such that the settlement terminal 300 does not store any coupon inventory amount and that a coupon inventory amount may be set as one utilization condition. In such a case, in a case where a customer intends to purchase a commercial product, the settlement terminal 300 generates identification information and causes the identification server 200 to perform the identification processing based on the utilization condition relating to a coupon inventory amount. Then it may also be configured such that when the identification is successful, the settlement terminal 300 settles the amount for the coupon from the account of the manager.

### <Effects>

As described above, the settlement system 1 according to the embodiment of the present invention comprises: the user terminal 100 that generates recognition information based on which the second user (the authorized person) who is allowed to utilize a predetermined account for non-cash settlement is recognized; the identification server 200 that stores the recognition information transmitted from the user terminal 100; and the settlement terminal 300 that performs settlement when the second user purchases a commercial product by utilizing the account. The settlement terminal 300 transmits an identification request comprising identification information to the identification server 200. The identification server 200 performs identification of the second user by matching the recognition information with the identification information, and transmits result information comprising a result of the identification to the settlement terminal 300. In a case where the result information indicates that the identification of the second user is successful, the settlement terminal 300 settles payment for the commercial product by using the predetermined account.

The settlement system 1 according to the embodiment of the present invention enables the first user who has an account for non-cash settlement to authorize the second user to utilize the account with a simple operation.

In addition, it is highly convenient since the second user may not have an account for non-cash settlement. Further, since the first user is capable of arbitrarily setting a utilization condition(s) when the second user utilizes the account, the first user is capable of easily managing the purchase by the second user.

In the settlement system 1 according to the embodiment of the present invention, the identification information for performing identification of the second user can be configured to be biometric information comprising face image data, voice data, and the like of the second user.

Accordingly, the settlement system 1 according to the embodiment of the present invention enables the second user to perform settlement by utilizing the account even when the second user goes to a store without carrying cash, which is extremely highly convenient.

Further, in the settlement system 1 according to the embodiment of the present invention, the identification information for performing identification of the second user can be configured to be an identification code (such as a two-dimensional barcode, a one-time password, and a PIN code) issued to the second user. In a case where such a configuration is employed, high security can be ensured.

### <Modifications>

The embodiment of the present invention has been described thus far, but the present invention is not limited to the embodiment described above and can be implemented by appropriately modifying the present invention within a scope not departing from the gist of the present invention.

In the embodiment described above, the identification server 200 continues to store the recognition information used for identification of the second user even after utilization of the settlement authority by the second user ends. However, in particular in a case where the recognition information is biometric information on the second user, the identification server 200 may not be preferable to continue to store the recognition information from the viewpoint of security.

In such a case, the identification server 200 may automatically discard at least recognition information on the second user after utilization of the settlement authority by the second user is completed or after a predetermined period has elapsed since the registration of the settlement authority for the second user is performed, for example.

In the embodiment described above, during the identification processing, the identification server 200 performs identification based on recognition information, condition information indicating a utilization condition(s), and settlement information, which are stored in the identification server 200, and identification information, commercial product information, and store information, which are comprised in an identification request from the settlement terminal 300.

However, the identification may be performed without using at least one of settlement information, commercial product information, and store information, depending on a utilization condition(s). For example, in a case where only a period is set as a utilization condition, the identification server 200 may perform the identification based only on recognition information, identification information, and time-related information.

In the embodiment described above, the identification server 200 performs the identification of the second user, but the present invention is not limited thereto. That is, when the second user purchases a commercial product at a store by using the account of the first user, the settlement terminal 300 may acquire recognition information on the second user from the identification server 200, and the settlement terminal 300 may perform the identification of the second user.

In the embodiment described above, when the second user purchases a commercial product at a store, the settlement terminal 300 transmits settlement information to the user terminal 100 of the first user as in step S9 of FIG. 2. Thus, the first user is able to know that the second user has been able to purchase the commercial product. In the present invention, the following processing may be performed as another example instead of the transmission of settlement information to the user terminal 100 by the settlement terminal 300 after the completion of settlement. That is, for example, before or after the identification server 200 performs the identification processing after receipt of an identification request from the settlement terminal 300, the identification server 200 may notify the user terminal 100 that the identification server 200 has received the identification request relating to the second user. Thus, it is possible for the first user to know that the second user intends to purchase a commercial product by using the account of the first user.

In the embodiment described above, when the second user intends to purchase a commercial product by using the account of the first user, the second user declares a kind of recognition information on the second user generated during the authorization processing to a clerk of a store, but the present invention is not limited thereto. As another example, when the second user intends to purchase a commercial product by using the account of the first user, for example, the second user may declare that the second user uses the account of the first user. In such a case, the clerk of the store operates the settlement terminal 300 to notify the identification server 200 that the user (the second user) other than the first user intends to purchase the commercial product by using the account of the first user. The identification server 200 that has been notified refers to recognition information and condition information, which are stored in the identification server 200, and notifies the settlement terminal 300 of the kind of the recognition information on the second user associated with the account of the first user. Thus, the clerk is able to know what kind of identification information should be generated.

The disclosure of Japanese Patent Application No. 2019-141490, filed on July 31, 2019, including the specification, drawings and abstract, is incorporated herein by reference in its entirety.

### Industrial Applicability

The present invention is useful for a settlement system that enables another person to utilize an account for non-cash settlement.

### Reference Signs List

- 1: Settlement system
- 100: User terminal
- 101: Communication unit
- 102: Control unit
- 103: Operation unit
- 104: Memory unit
- 200: Identification server
- 201: Communication unit
- 202: Memory unit
- 203: Identification unit
- 300: Settlement terminal
- 301: Communication unit
- 302: Identification information generating unit
- 303: Settlement unit
- 400: Network

## Claims

1. An identification processing apparatus, comprising:
a memory unit that stores recognition information based on which an authorized person who has been authorized to utilize at least part of a predetermined account for non-cash settlement is recognized;
an identification unit that acquires an identification request comprising identification information from a settlement terminal installed at a store, and performs identification of the authorized person by matching the recognition information with the identification information, the store being a store where the authorized person purchases a commercial product by utilizing the account; and
a communication unit that receives the identification information from the settlement terminal and transmits a result of the identification to the settlement terminal.

2. The identification processing apparatus according to claim 1, wherein the authorized person is different from an owner of the account.

3. The identification processing apparatus according to claim 1 or 2, wherein the recognition information and the identification information comprise biometric information on the authorized person.

4. The identification processing apparatus according to any one of claims 1 to 3, wherein the recognition information and the identification information comprise information on an identification code issued to the authorized person.

5. The identification processing apparatus according to any one of claims 1 to 4, wherein the memory unit stores condition information and the identification information in association with each other, the condition information comprising a utilization condition when the authorized person utilizes the account.

6. The identification processing apparatus according to claim 5, wherein in a case where the condition information comprises information on a commercial product that is purchasable by the authorized person, the identification unit receives commercial product information together with the identification information from the settlement terminal, and performs the identification of the authorized person based on the recognition information, the condition information, the identification information, and the commercial product information, the commercial product information comprising information on the commercial product to be purchased by the authorized person.

7. The identification processing apparatus according to claim 5 or 6, wherein in a case where the condition information comprises information on a store where the authorized person is allowed to purchase the commercial product, the identification unit receives store information together with the identification information from the settlement terminal, and performs the identification of the authorized person based on the recognition information, the condition information, the identification information, and the store information, the store information comprising information on the store where the authorized person purchases the commercial product.

8. The identification processing apparatus according to any one of claims 5 to 7, wherein in a case where the condition information comprises information on a period during which the authorized person is allowed to purchase the commercial product, the identification unit performs the identification of the authorized person based on the recognition information, the condition information, the identification information, and information from the settlement terminal, the information from the settlement terminal being information on a point in time when the authorized person purchases the commercial product.

9. The identification processing apparatus according to any one of claims 5 to 8, wherein:
in a case where the authorized person performs settlement by utilizing the account, the communication unit receives settlement information on the settlement from the settlement terminal, the settlement information being generated by the settlement terminal,
the memory unit stores the settlement information, the identification information, and the condition information in association with each other, and
in a case where the condition information comprises information on a number of times the authorized person is allowed to purchase the commercial product, the identification unit performs the identification of the authorized person based on the recognition information, the condition information, the identification information, and the settlement information

10. A settlement terminal that performs settlement, comprising:
an identification information generating unit that generates identification information that is transmitted to an identification server apparatus that stores recognition information based on which an authorized person who has been authorized to utilize at least part of a predetermined account for non-cash settlement is recognized;
a communication unit that transmits an identification request comprising the identification information to the identification server apparatus and receives result information comprising a result of identification of the authorized person, the identification having been performed by the identification server apparatus by matching the recognition information with the identification information; and
a settlement unit that settles, in a case where the result information indicates that the identification of the authorized person is successful, payment for a commercial product by using the account, the commercial product being a commercial product that the authorized person intends to purchase.

11. A set-up program causing the following processing to be executed, the processing comprising:
receiving an operation to set an authorized person who has been authorized to utilize at least part of a predetermined account for non-cash settlement;
generating recognition information based on which the authorized person is recognized; and
transmitting the recognition information to an identification server apparatus that stores the recognition information and performs identification of the authorized person based on the recognition information.

12. A settlement system, comprising:
a terminal apparatus that generates recognition information based on which an authorized person who has been authorized to utilize at least part of a predetermined account for non-cash settlement is recognized;
an identification server apparatus that stores the recognition information transmitted from the terminal apparatus; and
a settlement terminal that performs settlement when the authorized person purchases a commercial product by utilizing the account, the settlement terminal transmitting an identification request comprising identification information to the identification server apparatus, wherein
the identification server apparatus performs identification of the authorized person by matching the recognition information with the identification information, and transmits result information comprising a result of the identification to the settlement terminal, and
in a case where the result information indicates that the identification of the authorized person is successful, the settlement terminal settles payment for the commercial product by using the account.

13. A settlement method, comprising:
generating, by a terminal apparatus, recognition information based on which an authorized person who has been authorized to utilize at least part of a predetermined account for non-cash settlement is recognized;
storing, by an identification server apparatus, the recognition information transmitted from the terminal apparatus;
transmitting, by a settlement terminal, an identification request comprising identification information to the identification server apparatus, the settlement terminal performing settlement when the authorized person purchases a commercial product by utilizing the account;
performing, by the identification server apparatus, identification of the authorized person by matching the recognition information with the identification information, and transmitting, by the identification server apparatus, result information comprising a result of the identification to the settlement terminal; and
settling, by the settlement terminal, payment for the commercial product by using the account in a case where the result information indicates that the identification of the authorized person is successful.
